# EUROPÄISCHE PATENTANMELDUNG

(11) **EP 1 236 664 A2**
(43) Veröffentlichungstag der Anmeldung: **04.09.2002**
(21) Anmeldenummer: 02002120.0
(22) Anmeldetag: 29.01.2002
(51) Int. Cl.: B65G 53/56

(54) **Rohrweiche, insbesondere zum Verzweigen von Schüttgutströmen**

(30) Priorität: 01.03.2001 DE 10109916
(71) Anmelder: Coperion Waeschle GmbH & Co. KG, 88250 Weingarten (DE)
(72) Erfinder: Angele, Werner, 88250 Weingarten (DE); Cousins, Udo, 88213 Ravensburg (DE); Frank, Martin, 88214 Ravensburg (DE); Hemmelmann, Klaus, 51519 Odenthal (DE); Köhler, Siegbert, 88212 Ravensburg (DE); Soretz, Christian, 88214 Ravensburg (DE); Süsser, Ulrich, 88400 Biberach (DE); Zinser, Bruno, 88289 Waldburg (DE)
(74) Vertreter: Rau, Manfred, Dr. Dipl.-Ing.

(57) **Zusammenfassung**

Eine Weiche, insbesondere zum Verzweigen pneumatisch geförderter Schüttgutströme, umfasst ein Gehäuse (1) mit Eingangs- (2) und Ausgangsanschlüssen (3,4), die mittels eines in einer Ausnehmung (5) des Gehäuses drehbar angeordneten, sphärisch gewölbten Drehkükens (6) wahlweise miteinander verbindbar sind, sowie ortsfest im Gehäuse angeordneten Dichtringanordnungen (15), die auf der Oberfläche des Drehkükens dichtend anliegen. Um eine seitliche Entnahme des Drehkükens zu ermöglichen, weist das Gehäuse (1) mindestens einen Seitendeckel (9,9') mit in den Spalt zwischen Gehäuse und Drehküken (6) ragenden Vorsprüngen (13,13') auf, welche mit einem konkav gewölbten Innenumfang und einem kongruent zur Ausnehmung (5) des Gehäuses ausgebildeten Außenumfang versehen sind und die Dichtringanordnungen (15) im Bereich der Eingangs- (2) und Abgangsanschlüsse (3,4) halbseitig umgreifen.

Die Dichtringanordnungen (15) sind bevorzugt durch Befestigungsmittel, insbesondere Schrauben (16) mit mindestens einem Seitendeckel (9,9') verbindbar. Mit Vorteil sind die Befestigungsmittel durch den oder die Seitendeckel (9,9') in die Dichtringanordnung (15) führbar.

## Beschreibung

Die Erfindung betrifft eine Weiche, insbesondere zum Verzweigen pneumatisch geförderter Schüttgutströme, umfassend ein Gehäuse mit Eingangs- und Ausgangsanschlüssen, die mittels eines in einer Ausnehmung des Gehäuses drehbar angeordneten, sphärisch gewölbten Drehkükens wahlweise miteinander verbindbar sind, sowie ortsfest im Gehäuse eingesetzte Dichtringanordnungen, die auf der Oberfläche des Drehkükens dichtend anliegen.

Eine gattungsgemäße Weiche ist aus der japanischen Patentanmeldung Hei-4-116005 bekannt. Sie besteht aus einem Gehäuse mit lösbar angesetzten Flanschstücken, welche einen Eingangs- und zwei Abgangsanschlüsse ausbilden. In einer Ausnehmung des Gehäuses ist ein kugelförmiges Drehküken eingesetzt, das mit einem bogenförmigen Durchgangskanal versehen ist. Je nach Stellung des Drehkükens wird der Eingangsanschluss mit einem der Ausgangsanschlüsse in Strömungsverbindung gebracht. Seitlich ist die Ausnehmung des Gehäuses durch einen Deckel verschlossen.

Um das Drehküken zum Gehäuse hin abzudichten, sind in den Eingangs- und Ausgangsanschlüssen Dichtringanordnungen vorgesehen, die jeweils aus einem Rohrteil mit stirnseitig aufgesetzter Lippendichtung bestehen. Die Lippendichtung liegt eben auf der Kugeloberfläche des Drehkükens auf und umgibt den Durchgangskanal in der betreffenden Drehstellung vollumfänglich.

Die auf der konvex gewölbten Oberfläche des Drehkükens plan aufliegenden Lippendichtungen verhindern, dass dieses nach Abbau des Deckels seitlich aus der Dichtungsanordnung und der Gehäuseausnehmung herausgezogen werden kann. Für Wartungsarbeiten ist vielmehr die gesamte Weiche aus dem angebundenen Rohrleitungssystem auszubauen. Anschließend müssen die Flanschstücke abgeschraubt werden, so dass Rohrteil und Lippendichtung der Dichtringanordnung aus dem Eingangsanschluss und den Ausgangsanschlüssen herausgezogen werden können. Erst dann ist eine seitliche Entnahme des Drehkükens möglich. Der Zusammenbau erfolgt sinngemäss in umgekehrter Reihenfolge.

Bei der Erstmontage der Weiche ist dieses Vorgehen nicht von Nachteil. Wartungs- und Instandsetzungsarbeiten erfordern jedoch einen nicht akzeptablen Aufwand, da bereits für einen Tausch der Dichtungen ein vollständiger Ausbau der Weiche erforderlich ist.

In der Patentschrift DE 41 14 949 C1 wird eine weitere Schüttgutweiche mit Eingangs- und Abgangsanschlüssen und einem sphärisch gewölbten Drehküken offenbart. Das Drehküken ist in eine Gehäuseausnehmung eingepasst, die einen der Aussenkontur des Drehkükens entsprechenden, konkav gewölbten Innenumfang aufweist. Dieser darf, um das Drehküken seitlich einschieben zu können, dessen Kontur naturgemäss nur hälftig umspannen. Der übrige Teil der Ausnehmung ist zylinderförmig ausgeführt. Seitlich wird die Ausnehmung mittels eines Deckels verschlossen. Dieser ist mit nach innen ragenden Vorsprüngen versehen, deren zylinderförmiger Aussenumfang in den betreffenden Teil der Ausnehmung im Gehäuse eingreift. Der Innenumfang ist, der Kontur des Drehkükens entsprechend, ebenfalls konkav ausgeführt. Der Vorsprung des Deckels füllt somit den verbleibenden Abstand zwischen Gehäuse und Drehküken im wesentlich aus, wobei der Vorsprung im Bereich der Eingangs- und Abgangsanschlüsse halbkreisförmig ausgenommen ist. Dichtungsanordnungen zwischen Drehküken und Gehäuse, gleich welcher Art, sind nach diesem Stand der Technik nicht vorgesehen. Eine Abdichtung wird nur durch eine entsprechend enge Passung zwischen Drehküken und dem Gehäuse beziehungsweise den Vorsprüngen des Deckels erzielt.

Der Ausbau des Kükens ist relativ einfach, da es nach dem Entfernen des Deckels und der einstückig mit ihm verbundenen Vorsprünge seitlich herausgezogen werden kann. Ein Ausbau der Weiche aus dem Rohrleitungssystem ist hierzu nicht erforderlich.

Der vorliegenden Erfindung liegt die Aufgabe zugrunde, eine gedichtete Weiche bereitzustellen, bei welcher ein Austausch der Dichtungen und die Reinigung von Gehäuseausnehmung und Drehküken auch dann mit geringem Aufwand möglich ist, wenn die Weiche in ein Leitungssystem eingebaut ist.

Die Aufgabe wird erfindungsgemäß dadurch gelöst, dass das Gehäuse mindestens einen Seitendeckel mit in den Spalt zwischen Gehäuse und Drehküken ragenden Vorsprüngen aufweist, welche mit einem konkav gewölbten Innenumfang und einem kongruent zur Gehäusebohrung ausgebildeten Außenumfang versehen sind und die Dichtringanordnungen im Bereich der Eingangs- und Abgangsanschlüsse halbseitig umgreifen.

Die abhängigen Ansprüche betreffen bevorzugte Ausführungsformen der Erfindung.

Die Figuren stellen beispielhaft und schematisch Ausführungen der Erfindung dar.

Es zeigen:
- Fig. 1: einen Längsschnitt durch eine erfindungsgemäss ausgeführte Weiche
- Fig. 2: die gleiche Weiche im Querschnitt
- Fig. 3: eine Darstellung des Ausbaus von Drehküken und Dichtringanordnungen bei der zuvor beschriebenen Weiche
- Fig. 4: ein erstes Beispiel für eine Dichtringanordnung
- Fig. 5: eine Dichtringanordnung nach einer anderen Ausführung der Erfindung

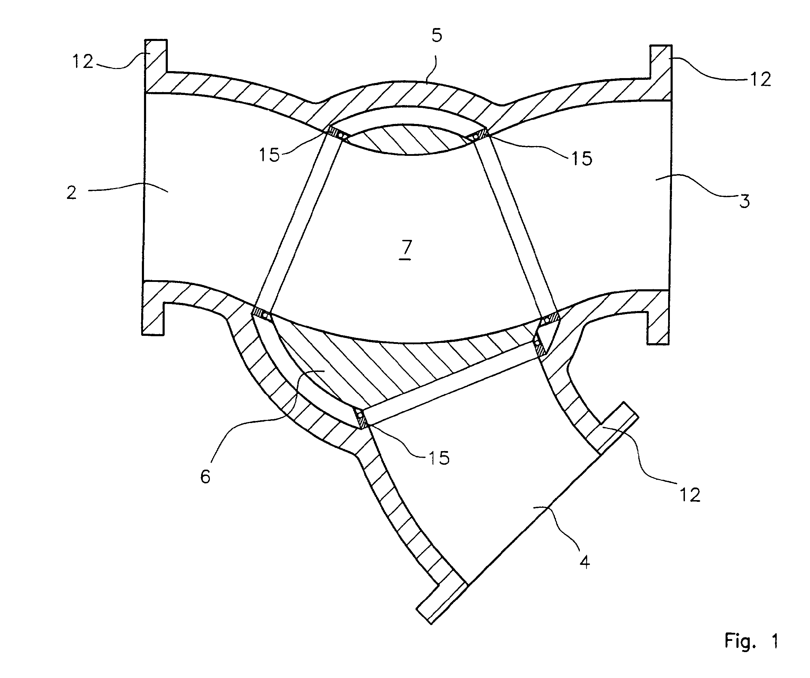

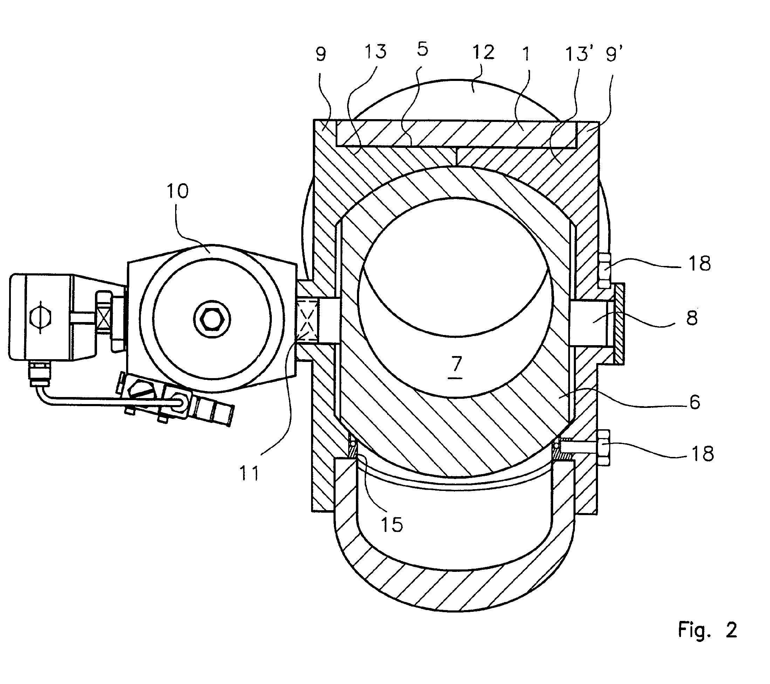

Die in Figur 1 und 2 abgebildete Schüttgutweiche besteht aus einem Gehäuse 1 mit einem Eingangsanschluss 2, einem mit diesem fluchtenden ersten Abgangsanschluss 3 und einem winklig abzweigenden zweiten Abgangsanschluss 4. In einer bereichsweise zylinderförmige Ausnehmung 5 des Gehäuses 1 ist ein Drehküken 6 mit sphärisch gewölbtem Aussenumfang angeordnet. Das Drehküken 6 weist einen bogenförmigen Durchgangskanal 7 auf, der je nach Stellung des Drehkükens 6 den Eingangsanschluss 2 mit einem der Abgangsanschlüsse 3, 4 verbindet. Das Drehküken 6 ist über eine Welle 8 in Seitendeckeln 9, 9' gelagert und mittels einer Antriebsvorrichtung 10 verstellbar, die über eine Steckverbindung 11 mit einem Ende der Welle 8 drehfest verbunden und am Seitendeckel 9 befestigt ist. Der Eingangsanschluss 2 und die Abgangsanschlüsse 3, 4 sind mit Flanschen 12 versehen, die einstückig mit dem Gehäuse 1 verbunden sind und mittels derer die Weiche mit weiterführenden Förderleitungen verschraubt werden kann.

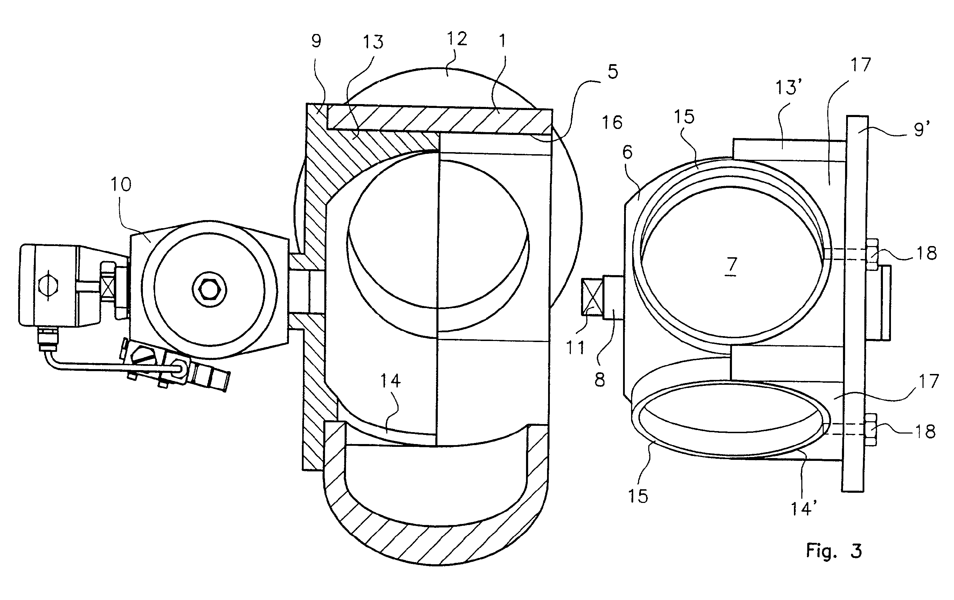

Der Spalt zwischen dem zylinderförmigen Innenumfang der Ausnehmung 5 und dem konvex gewölbten Aussenumfang des Drehkükens 6 wird im wesentlichen durch ringförmige Vorsprünge 13, 13' ausgefüllt, die einstückig mit den zugeordneten Seitendeckeln 9, 9' verbunden sind und in der Symmetrieebene von Gehäuse 1 beziehungsweise Drehküken 6 bündig aufeinanderstossen. Im Bereich des Eingangsanschlusses 2 und der Abgangsanschlüsse 3, 4 sind die Vorsprünge 13, 13' mit halbkreisförmigen Aussparungen 14, 14' versehen (siehe Figur 3).

Im Bereich dieser Aussparungen 14, 14' sind jeweils Dichtringanordnungen 15 eingelassen, die ortsfest im Gehäuse 1 angeordnet sind und dichtend auf der relative zu den Dichtringanordnungen 15 bewegbaren Kugeloberfläche des Drehkükens 6 aufliegen. Die Dichtringanordnungen 15 werden also jeweils von den zugeordneten Hälften der Aussparungen 14 und 14' halbseitig umgriffen. Mit ihren nach aussen gerichteten Stirnflächen liegen die Dichtringanordnungen auf plan gearbeiteten Bereichen im Gehäuse auf, die jeweils eine orthogonal zum Radius der Ausnehmung 5 ausgerichtete, den Eingangs- 2 bzw. die Abgangsanschlüsse 3, 4 umgebende Ebene 16 bildet, die sich zur Vermeidung von Hinterschneidungen über die gesamte Breite des Gehäuses erstreckt. In den übrigen Bereichen ist die Ausnehmung 5 zylinderförmig ausgeführt. Die Vorsprünge 13, 13' sind in diesen Bereichen am Aussenumfang mit entsprechenden Abflachungen 17 versehen, die sich ebenfalls über die gesamte Breite der Vorsprünge 13, 13' bis zu den Seitendeckeln 9, 9' erstrecken.

Figur 3 zeigt die zuvor beschriebene Weiche nach dem Ausbau des Drehkükens 6. Da dieser seitlich möglich ist, ist eine Demontage der Weiche aus dem Rohrleitungssystem nicht erforderlich. Zum Ausbau wird zunächst der Seitendeckel 9' vom Gehäuse 1 gelöst, während der antriebsseitige Seitendeckel 9 am Gehäuse verbleiben kann. Die Erfindung umfasst daher grundsätzlich auch Ausführungsformen, bei denen der antriebsseitige Seitendeckel 9 einstückig mit dem Gehäuse verbunden ist. Die dargestellte mehrteilige Ausführung weist jedoch mit den Vorteil auf, dass die Antriebsseite der Weiche in Abhängigkeit vom verfügbaren Bauraum in der Förderanlage mit geringem Aufwand gewechselt werden kann.

Im nächsten Schritt werden der Seitendeckel 9', das Drehküken 6 und die drei Dichtringanordnungen 15 als Einheit gemeinsam aus der Ausnehmung 5 herausgezogen. Dieses ist problemlos möglich, da keines dieser Bauteile Hinterschneidungen im Gehäuse 1 oder dem antriebsseitigen Seitendeckel 9 aufweist. Um ein Herunterfallen der Dichtringanordnungen 15 von der Oberfläche des Drehkükens 6 nach dem Herausziehen zu verhindern, sind diese durch lösbare Befestigungsmittel am Seitendeckel fixiert. Im Ausführungsbeispiel wird jeweils eine Schraube 18 von aussen durch den Seitendeckel 9' hindurchgeführt und mit der zugeordneten Dichtringanordnung 15 verschraubt. Durch Lösen der Schrauben 18 können die Dichtringanordnungen 15 nachfolgend nach aussen entnommen und die Welle 8 des Drehkükens 6 aus dem Seitendeckel 9' gezogen werden.

Diese Ausbildung trägt erheblich zur Arbeitssicherheit bei, da der letztgenannte Arbeitsschritt in einer ausserhalb der Förderanlage befindlichen Werkstatt erfolgen kann. Ein Herabfallen des Drehkükens 6 oder einer Dichtringanordnung 15 beim Abziehen des Seitendeckels 9' wird wirksam vermieden. Dies ist von besonderer Bedeutung, da Schüttgutweichen häufig in großer Höhe, beispielsweise auf dem Dach eines Silos eingebaut sind.

Nach dem Austausch der Dichtringanordnungen 15 oder einer Reinigung der Weiche wird die Welle 8 des Drehkükens 6 wieder in die betreffende Bohrung des Seitendeckels 9' eingeführt. Nachfolgend können die Dichtringanordnungen 15 im Bereich der Aussparungen 14' auf die Kugeloberfläche des Drehkükens 6 aufgelegt und mit den Schrauben 18 am Seitendeckel 9' fixiert werden. Auch diese Vormontage ist bereits ausserhalb der Förderanlage durchführbar. Nachfolgend wird die Einheit aus Seitendeckel 9', Drehküken 6 und Dichtringanordnungen 15 zum Gehäuse 1 der Weiche transportiert und in die Ausnehmung 5 eingefügt. Letztlich ist nur noch der Seitendeckel 9' mit dem Gehäuse 1 zu verschrauben.

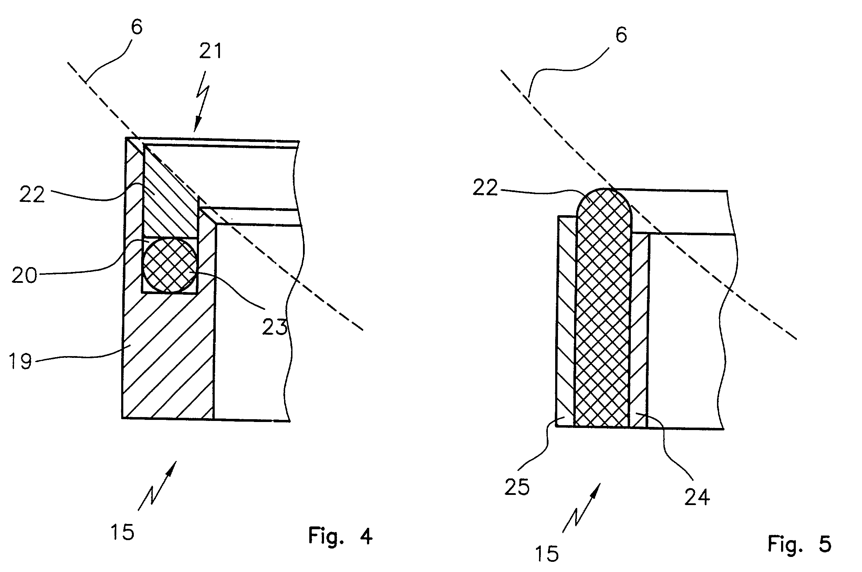

Die Figuren 4 und 5 zeigen unterschiedliche Ausführungsformen der Dichtringanordnung 15. Die Variante nach Figur 4 besteht aus einem Metallring 19 mit einer Nut 20, der bevorzugt als Drehteil hergestellt wird. Die nutseitige Stirnfläche 21 des Metallrings 19 ist, der zugeordneten konvexen Kontur des Drehkükens 6 entsprechende, schräg und konkav gewölbt ausgeführt. In die Nut 20 ist ein relativ starrer Dichtring 22, beispielsweise aus PTFE, axial verschiebbar eingelassen, der ein wenig aus der Nut 20 herausragt und durch einen Elastomerring 23 auf die Oberfläche des Drehkükens 6 gepresst wird. Anstelle des Elastomerrings 23 können alternativ metallische Federn zum Einsatz kommen. Auch der Dichtring 22 ist stirnseitig an den Umfang des Drehkükens 6 angepasst, kann aber zur Erreichung eines Labyrintheffekts auch mit einer Vielzahl konzentrischer Nuten versehen werden. Die beschriebene Dichtringanordnung 15 gewährleistet, dass der Strömungskanal in der Weiche stets von metallischen Wandungen gegrenzt wird. Die relativ aufwendige Ausführung des Dichtrings 22 in Verbindung mit dem Elastomerring 23 ist insbesondere bei der Förderung von pulverförmigen Schüttgütern vorteilhaft.

Eine einfachere Ausbildung ist in Figur 5 dargestellt. Die Dichtringanordnung 15 besteht aus zwei zueinander beabstandeten, koaxialen angeordneten metallischen Rohrabschnitten 24, 25 unterschiedlicher Länge, die im Bereich der Anlagefläche an das Drehküken 6 versetzt angeordnet sind. Zwischen dem inneren Rohrabschnitten 24 und dem äusseren Rohrabschnitt 25 ist ein elastischer Dichtring 22 stoffschlüssig eingebracht, der zum Drehküken 6 hin über die Rohrabschnitte 24, 25 hervorragt und an der Oberfläche des Drehkükens 6 anliegt. Auch in dieser relativ preiswerten Ausführung ist der Strömungskanal im wesentlichen von einer Metallwandung umgeben. Sie ist insbesondere für die Förderung granulärer Schüttgüter geeignet.

## Patentansprüche

1. Weiche, insbesondere zum Verzweigen pneumatisch geförderter Schüttgutströme, umfassend ein Gehäuse (1) mit Eingangs- (2) und Ausgangsanschlüssen (3), (4), die mittels eines in einer Ausnehmung (5) des Gehäuses drehbar angeordneten, sphärisch gewölbten Drehkükens (6) wahlweise miteinander verbindbar sind, sowie ortsfest im Gehäuse eingesetzte Dichtringanordnungen (15), die auf der Oberfläche des Drehkükens dichtend anliegen, **dadurch gekennzeichnet, dass** das Gehäuse (1) mindestens einen Seitendeckel (9), (9') mit in den Spalt zwischen Gehäuse und Drehküken (6) ragenden Vorsprüngen (13), (13') aufweist, welche mit einem konkav gewölbten Innenumfang und einem kongruent zur Ausnehmung (5) des Gehäuses ausgebildeten Außenumfang versehen sind und die Dichtringanordnungen (15) im Bereich der Eingangs- (2) und Abgangsanschlüsse (3), (4) halbseitig umgreifen.

2. Weiche nach Anspruch 1, **dadurch gekennzeichnet, dass** die Dichtringanordnungen (15) durch Befestigungsmittel mit mindestens einem Seitendeckel (9), (9') verbindbar sind.

3. Weiche nach Anspruch 2, **dadurch gekennzeichnet, dass** die Befestigungsmittel durch den oder die Seitendeckel (9), (9') in die Dichtringanordnung (15) führbar sind.

4. Weiche nach einem der vorhergehenden Ansprüche, **dadurch gekennzeichnet, dass** die Dichtringanordnung (15) einen Metallring (19) umfasst, der stirnseitig mit einer zur Aufnahme eines Dichtrings (22) geeigneten Nut (20) versehen ist.

5. Weiche nach Anspruch 4, **dadurch gekennzeichnet, dass** der Dichtring (22) axial verschieblich ist und im Grund der Nut (20) ein auf den Dichtring (22) wirkender Elastomerring (23) eingelassen ist.

6. Weiche nach einem der Ansprüche 1 bis 3, **dadurch gekennzeichnet, dass** die Dichtringanordnung (15) mindestens einen inneren metallischen Rohrabschnitt (24) umfasst, der von einem elastischen, kükenseitig über den Rohrabschnitt (24) hinausragenden Dichtring (22) umgeben ist.

7. Weiche nach Anspruch 6, **dadurch gekennzeichnet, dass** der elastische Dichtring (22) von aussenseitig einem weiteren metallischen Rohrabschnitt (25) umgeben ist.

8. Weiche nach Anspruch 6 oder 7, **dadurch gekennzeichnet, dass** der Dichtring (22) und der Rohrabschnitt (24) und/oder (25) stoffschlüssig miteinander verbunden sind.

9. Weiche nach Anspruch 2, **dadurch gekennzeichnet, dass** die Befestigungsmittel Schrauben (18) sind.
